# EUROPEAN PATENT SPECIFICATION

(11) **EP 4 060 950 B1**
(45) Date of publication and mention of the grant of the patent: **06.11.2024**
(21) Application number: 20910449.6
(22) Date of filing: 30.09.2020
(51) Int. Cl.: H04L 45/02, H04L 45/28

(54) **PATH VERIFICATION METHOD AND RELATED DEVICE**
WEGVERIFIZIERUNGSVERFAHREN UND ZUGEHÖRIGE VORRICHTUNG
PROCÉDÉ DE VÉRIFICATION DE TRAJET ET DISPOSITIF ASSOCIÉ

(30) Priority: 31.12.2019 CN 201911417073
(43) Date of publication of application: 21.09.2022
(73) Proprietor: Huawei Technologies Co., Ltd., Shenzhen, Guangdong 518129 (CN)
(72) Inventor: WANG, Haibo, Shenzhen, Guangdong 518129 (CN); ZHUANG, Shunwan, Shenzhen, Guangdong 518129 (CN); JIA, Junli, Shenzhen, Guangdong 518129 (CN); WU, Hong, Shenzhen, Guangdong 518129 (CN); WANG, Shuqiang, Shenzhen, Guangdong 518129 (CN)
(74) Representative: MERH-IP Matias Erny Reichl Hoffmann Patentanwälte PartG mbB
(86) International application number: PCT/CN2020/119271
(87) International publication number: WO 2021/135481

(56) References cited:
- CN-A- 1 764 122
- CN-A- 108 718 247
- CN-A- 110 971 522
- US-A1- 2009 141 637
- US-A1- 2016 014 014
- US-B1- 8 141 156
- LIXIN GAO: "On inferring autonomous system relationships in the internet", IEEE /ACM TRANSACTIONS ON NETWORKING, IEEE / ACM, NEW YORK, NY, US, vol. 9, no. 6, 1 December 2001 (2001-12-01), pages 733 - 745, XP058126629, ISSN: 1063-6692, DOI: 10.1109/90.974527
- XENOFONTAS DIMITROPOULOS ET AL: "AS Relationships: Inference and Validation", ARXIV.ORG, CORNELL UNIVERSITY LIBRARY, 201 OLIN LIBRARY CORNELL UNIVERSITY ITHACA, NY 14853, 6 April 2006 (2006-04-06), XP080233891, DOI: 10.1145/1198255.1198259

## Description

### TECHNICAL FIELD

Embodiments of this application relate to the field of communication technologies, and in particular, to a path verification method and a related device.

### BACKGROUND

The Border Gateway Protocol (Border Gateway Protocol, BGP) is an inter-autonomous system routing protocol running over the Transmission Control Protocol (Transmission Control Protocol, TCP). As an external routing protocol, BGP mainly aims to ensure routing information communication between routers in different autonomous systems ASes.

The BGP protocol was initially designed based on trustworthiness of neighbor information. Therefore, authentication information is not carried in BGP message exchange. Consequently, accidents such as route leakage and hijack often occur. To resolve such problems, a verification algorithm is usually added to the BGP protocol to determine whether advertisement of routing information is valid. An existing route origin authorization ROA algorithm can be used only to verify whether a source AS is tampered with. A border gateway protocol security BGP Sec algorithm is used to verify trustworthiness of routing information advertised by each AS, but has a forward compatibility vulnerability.

Therefore, how to simply and efficiently verify a BGP routing AS path and improve reliability of a verification algorithm becomes a problem to be urgently resolved.
Document US 8 141 156 B1 generally discloses a method and apparatus for mitigating routing misbehavior in a network is described. In one example, routing protocol traffic is received from a remote router destined for a local router. The routing protocol traffic is parsed to identify a subset of traffic. The subset of traffic is normalized to identify and correct misconfigured routing updates. The routing protocol traffic is provided to the local router. In one embodiment, the subset of traffic is normalized by at least one of detecting and correcting routing protocol semantics, detecting and correcting violations in routing policies, detecting and correcting routing anomalies, or mitigating routing instability.
Document LIXIN GAO: "On inferring autonomous system relationships in the internet", IEEE ACM TRANSACTIONS ON NETWORKING, vol. 9, no. 6, 1 December 2001, pages 733 - 745 generally discloses an augmented AS graph representation that classifies AS relationships into customer-provider, peering, and sibling relationships. The types of routes that can appear in BGP routing tables are classified based on the relationships between the ASs in the path and heuristic algorithms that infer AS relationships from BGP routing tables are presented. Document XENOFONTAS DIMITROPOULOS ET AL: "AS Relationships: Inference and Validation", 6 April 2006 generally discloses heuristics for inferring AS relationships. In particular, the discloses heuristics improves the state-of-the-art in several technical aspects, one of them being a more realistic problem formulation that accepts that AS paths do not always exhibit a hierarchical pattern.

### SUMMARY

Embodiments of this application provide a path verification method and a related device, to verify whether an advertisement path of a route is valid. In particular, embodiments of the present application are defined by the independent claims. Additional features of embodiments of the invention are presented in the dependent claims. In the following, parts of the description and drawings referring to former embodiments which do not necessarily comprise all features to implement embodiments of the claimed invention are not represented as embodiments of the invention but as examples useful for understanding the embodiments of the invention. Embodiments of the present application (or the present disclosure) provide a path verification method, as defined by claim 1, a network device, as defined by claim 5 and a path verification system, as defined by claim 7.

### BRIEF DESCRIPTION OF DRAWINGS

FIG. 1 is a topology diagram of a business relationship between Internet service providers;
FIG. 2 is a diagram of a network structure in ar AS;
FIG. 3 is a schematic flowchart of a path verification method according to a claimed embodiment of this application;
FIG. 4 is a schematic flowchart of another path verification method,
FIG. 5 is a schematic diagram of a structure of a network device;
FIG. 6 is a schematic diagram of a structure of a database server,
FIG. 7 is a schematic diagram of a structure of a database server;
FIG. 8 is a schematic diagram of a structure of another network device,
FIG. 9 is a schematic diagram of a structure of another database server; and
FIG. 10 is a schematic diagram of a structure of another database server.

### DESCRIPTION OF EMBODIMENTS

Embodiments of this application provide a path verification method and a related device, to verify whether advertisement of routing information is valid.

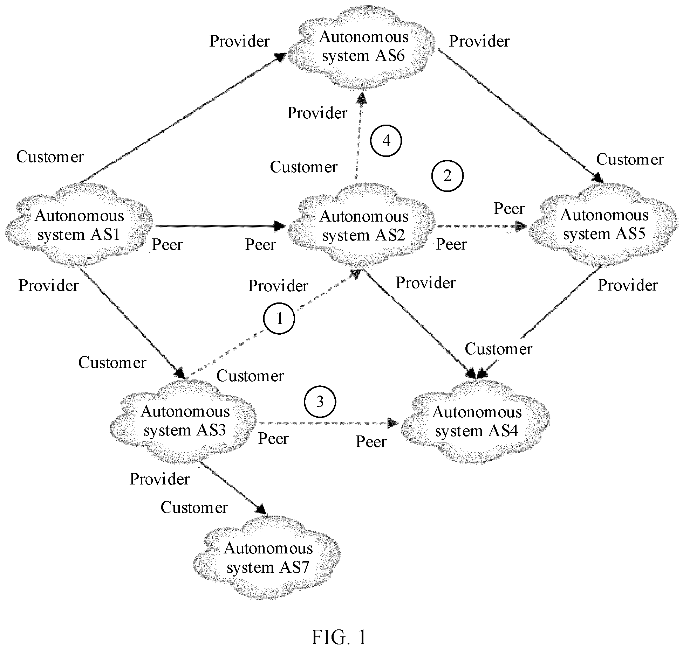

FIG. 1 is a topology diagram of a business relationship between Internet service providers according to this application. As shown in FIG. 1, each Internet service provider corresponds to one autonomous system, the autonomous systems are distinguished by using autonomous system numbers, and a business relationship in each Internet is configured in advance.

For the Internet, generally, Internet service providers ISPs are mainly classified into a provider, a customer, and a peer. A business relationship between two service providers ISPs is generally a P2C relationship, a C2P relationship, and a peering relationship. For example, in FIG. 1, a relationship between AS 1 and AS3 is the P2C relationship, that is, AS3 is a customer of AS1; a relationship between AS1 and AS6 is the C2P relationship, that is, AS6 is a provider of AS 1; a relationship between AS 1 and AS2 is the peering relationship, that is, AS 1 and AS2 are two peers.

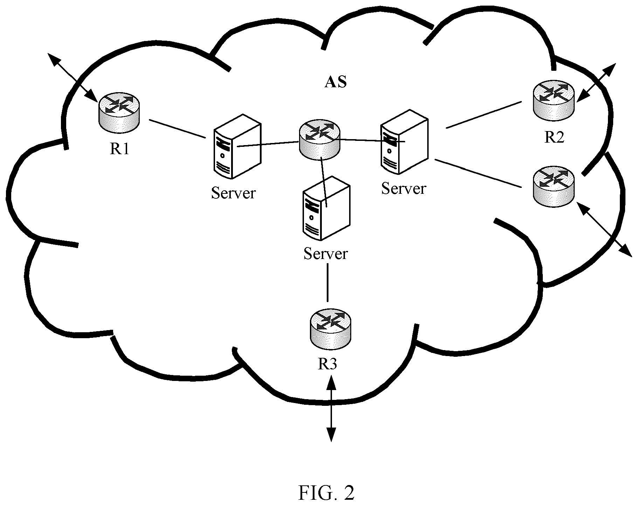

FIG. 2 uses an example to describe a network architecture in any AS in this application. As shown in FIG. 2, each Internet service provider corresponds to one autonomous system, and the AS includes a plurality of devices such as a plurality of routing devices and a plurality of servers. The plurality of servers exchange data through the routing devices. For example, R1, R2, and R3 are BGP border routers, are connected to a border router of a neighboring AS, and execute a BGP routing protocol to complete data exchange between different ASes.

In a routing information advertisement process, there may be an upstream advertisement mode and a downstream advertisement mode. Specifically, in the upstream advertisement mode, a customer advertises routing information to a provider; in the downstream advertisement mode, a provider advertises routing information to a customer. On a routing path, a route advertisement rule is that a routing device is not allowed to advertise, to a provider neighbor or a peering neighbor of the routing device, routing information learned from another provider neighbor of the routing device, and is not allowed to advertise, to a provider neighbor or a peering neighbor of the routing device, routing information learned from another peering neighbor of the routing device.

For example, in the foregoing topology diagram, AS1 is a provider neighbor of AS3, AS2 is another provider neighbor of AS3, AS7 is a customer neighbor of AS3, and AS4 is a peering neighbor of AS3. After AS1 advertises routing information to AS3, AS3 may continue to advertise the learned routing information to AS7, but is not allowed to advertise the learned routing information to AS2 or AS4. That is, on a route advertisement path, there may be three cases for the advertisement modes: 1. Route advertisement is performed in the upstream advertisement mode. 2. Route advertisement is performed in the downstream advertisement mode. 3. Route advertisement is performed first in the upstream advertisement mode and then in the downstream advertisement mode, where in this case, the advertisement mode can be changed only once.

If a routing device advertises, to a provider neighbor or a peering neighbor, routing information learned from another provider neighbor or another peering neighbor of the routing device, the routing information leaks, and accurate verification needs to be performed by using a verification algorithm in these several cases to obtain a reliable verification result.

A routing autonomous system path (Autonomous System Path, AS-PATH) attribute is a well-known mandatory attribute of BGP, and means recording a route advertisement path by using ordered AS numbers. When initiating a route, a BGP speaker adds an AS number of the BGP speaker to an AS-PATH. That is, each time the route passes through an autonomous system, an AS number of the autonomous system is added to the AS-PATH. The AS-PATH may be used to describe all autonomous systems that the route passes through, and more added AS numbers indicate more autonomous systems that the route passes through. For example, in the foregoing topology diagram, AS1 advertises a route, and the route is transmitted to AS4 through AS6 and AS5 in sequence. In this case, an AS-PATH that is of the route and that is received by AS4 is AS5 AS6 AS1.

An existing manner of storing a business relationship between ISPs is as follows: An ISP whose business role is a customer or a peer in two ASes performs registration. For example, in the foregoing topology diagram, for AS1, AS1 is a customer neighbor of AS6, and is a peering neighbor of AS2. Therefore, AS1 needs to report AS6 and AS2 to a database server, and the database server generates two AS pairs, namely, (AS1, AS2) and (AS1, AS6). (AS1, AS6) is used to indicate that AS 1 and AS6 are in the C2P relationship, in other words, AS 1 is a customer neighbor of AS6; (AS 1, AS2) is used to indicate that AS 1 and AS2 are in the peering relationship, in other words, AS 1 is a peering neighbor of AS2. However, AS1 is a provider neighbor of AS3. In this case, AS3 instead of AS1 needs to register a relationship between AS3 and AS1, so that an AS pair (AS3, AS1) is generated. This ensures that all AS pairs in a database are in the C2P relationship and the peering relationship, and two AS numbers in each AS pair are arranged in sequence strictly. It may be understood that the database may be referred to as a C2P database.

For example, if all customers in the foregoing topology diagram 1 perform registration, content in the C2P database is shown as follows:
(AS1, AS2), (AS1, AS6);
(AS2, AS1), (AS2, AS5), (AS2, AS6);
(AS3, AS1), (AS3, AS2), (AS3, AS4);
(AS4, AS2), (AS4, AS3), (AS4, AS5);
(AS5, AS2), (AS5, AS6);
(AS6, 0);
(AS7, AS3).

Then, verification may be performed based on the database, and a specific verification result is as follows:
When a routing device receives a packet related to route advertisement, the routing device first obtains an AS-PATH of a route; groups ordered AS numbers in the AS-PATH, where two sequentially adjacent AS numbers form an AS pair; and then compares, with an AS pair in the database, each AS pair obtained through grouping. For a single AS pair, whether a leftmost AS in the AS pair has performed registration is first verified. If the leftmost AS has not performed registration, a verification result is returned as unknown. If the leftmost AS pair has performed registration, but there is no to-be-verified AS pair in AS pairs in the database that correspond to the leftmost AS, a verification result is returned as invalid. If a to-be-verified AS pair is exactly matched, a result is returned as valid. Generally, the verification result as unknown may be considered as valid.

Verification of the entire path is classified into the following several cases. If the 1^{st} AS pair in the AS-PATH is successfully verified in the C2P database, that is, two adjacent ASes in the 1^{st} AS pair are in the C2P relationship, subsequent AS pairs that are sequentially arranged need to be verified in sequence. If all the AS pairs are successfully verified, it indicates that the path for the route advertisement is valid and the route advertisement is performed in the upstream advertisement mode. If the 1^{st} AS pair in the AS-PATH is successfully verified in the C2P database, once a verification failure result occurs during sequential verification of subsequent AS pairs, locations of AS numbers in all subsequent to-be-verified AS pairs need to be reversed, and reversed AS pairs are verified one by one. If all the reversed AS pairs are successfully verified, it indicates that the path for the route advertisement is valid and the route advertisement is performed first in the upstream advertisement mode and then in the downstream advertisement mode. Once a verification failure result occurs on the reversed AS pairs, the entire path is invalid.

If the 1^{st} AS pair in the AS-PATH fails to be verified in the C2P database, locations of AS numbers in all subsequent to-be-verified AS pairs need to be reversed, and then all reversed AS pairs are verified one by one. Once a reversed AS pair fails to be verified, the entire path is invalid. If all the reversed AS pairs are successfully verified, it indicates that the path for the route advertisement is valid and the route advertisement is performed in the downstream advertisement mode.

For example, a verification process may be as follows:
It is assumed that when AS7 advertises a route to AS2, an AS-PATH that is of the route and that is received by AS2 is AS4 AS3 AS7.

The AS-PATH is first divided into AS pairs, namely, (AS7, AS3) and (AS3, AS4), and then the two AS pairs are verified separately. Because (AS7, AS3) exists in the foregoing C2P database, a verification result of (AS7, AS3) is valid; similarly, a verification result of (AS3, AS4) is also valid. According to the foregoing verification rule, a verification result of the path is that the path is valid. However, actually, for AS4, AS4 advertises, to the provider neighbor AS2 of AS4, routing information learned from the peering neighbor AS3 of AS4. This violates the advertisement principle, and the path should be invalid. Therefore, according to the foregoing algorithm, the verification result is untrustworthy.

It is assumed that when AS1 advertises a route to AS2, an AS-PATH that is of the route and that is received by AS2 is AS3 AS1.

Similarly, the AS-PATH is divided into (AS1, AS3), and then verification is performed based on the foregoing C2P database. In the database, the AS pairs registered by AS3 do not include (AS1, AS3). Therefore, a verification result of (AS1, AS3) is invalid, and the entire path is also invalid. Actually, on the path, AS3 provides, to the provider neighbor AS2 of AS3, routing information learned from another provider neighbor AS1. Such route advertisement is invalid, and therefore a verification result is trustworthy.

It is assumed that when AS1 advertises a route to AS6, an AS-PATH that is of the route and that is received by AS6 is AS2 AS1.

Similarly, the AS-PATH is divided into (AS1, AS2), and then verification is performed based on the foregoing C2P database. In the database, the AS pairs registered by AS1 include (AS1, AS2). Therefore, a verification result of (AS1, AS2) is valid, and the entire path is also valid. Actually, on the path, AS2 provides, to the provider neighbor AS6 of AS2, routing information learned from the peering neighbor AS 1. Such route advertisement is invalid, and therefore a verification result is untrustworthy.

It is assumed that when AS3 advertises a route to AS5, an AS-PATH that is of the route and that is received by AS5 is AS2 AS6 AS1 AS3.

Similarly, the AS-PATH is divided into (AS3, AS1), (AS1, AS6), and (AS6, AS2). Based on the foregoing C2P database, a verification result of (AS3, AS 1) is valid, a verification result of (AS 1, AS6) is valid, and a verification result of (AS6, AS2) is invalid. Therefore, the entire path is invalid. Actually, on the path, AS2 provides, to the peering neighbor AS5 of AS2, routing information learned from the provider neighbor AS6. Such route advertisement is invalid, and therefore a verification result is trustworthy.

It is assumed that when AS3 advertises a route to AS4, an AS-PATH that is of the route and that is received by AS4 is AS5 AS2 AS6 AS1 AS3.

Similarly, the AS-PATH is divided into (AS3, AS1), (AS1, AS6), (AS6, AS2), and (AS2, AS5). Based on the foregoing C2P database, a verification result of (AS3, AS 1) is valid, a verification result of (AS 1, AS6) is valid, and a verification result of (AS6, AS2) is invalid. After (AS6, AS2) is verified to be invalid, (AS2, AS5) needs to be reversed to (AS5, AS2), and then (AS5, AS2) is verified. A verification result is valid. Therefore, the entire path is valid. Actually, on the path, AS2 provides, to the peering neighbor AS5 of AS2, routing information learned from the provider neighbor AS6. Such route advertisement is invalid, and therefore a verification result is untrustworthy.

It is assumed that when AS1 advertises a route to AS4, an AS-PATH that is of the route and that is received by AS4 is AS2 AS3 AS1.

Similarly, the AS-PATH is divided into (AS1, AS3) and (AS3, AS2). Based on the foregoing C2P database, a verification result of (AS1, AS3) is invalid. After (AS1, AS3) is verified to be invalid, (AS1, AS3) needs to be reversed to (AS3, AS1), and then (AS3, AS1) is verified. A verification result is invalid. Therefore, the entire path is invalid. Actually, on the path, AS3 provides, to the provider neighbor AS2 of AS3, routing information learned from the provider neighbor AS1. Such route advertisement is invalid, and therefore a verification result is trustworthy.

For the foregoing cases in which the verification result is untrustworthy, embodiments of this application provide the following embodiments. The following describes technical solutions in this application in detail with reference to accompanying drawings. It is clear that the described embodiments are merely some rather than all of embodiments of this application.

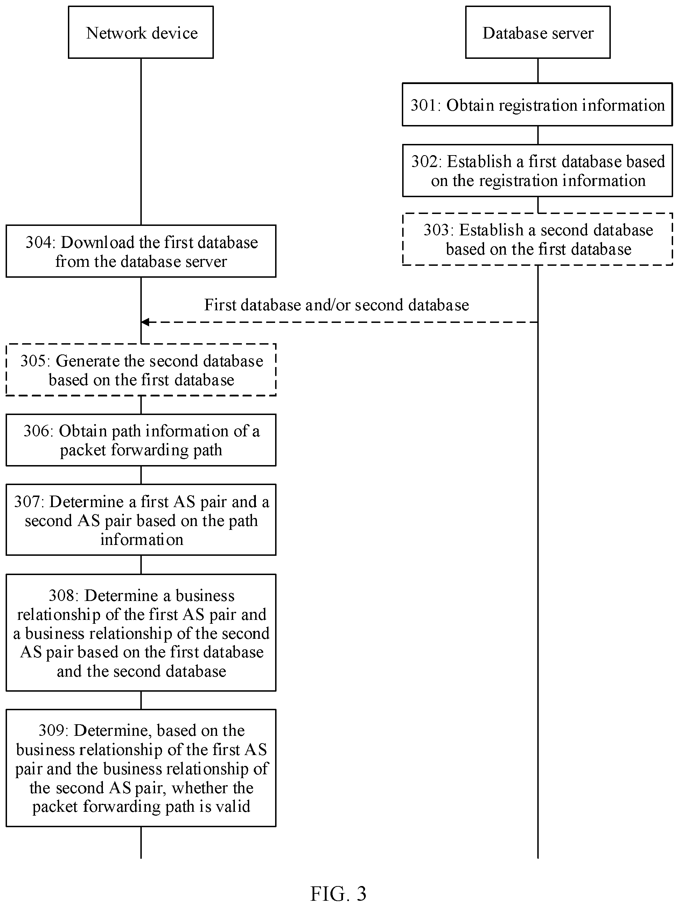

FIG. 3 is a schematic flowchart of a path verification method according to an embodiment of this application. As shown in FIG. 3, the method includes the following steps.

301: A database server obtains registration information.

An Internet service provider ISP may send a registration request to an Internet information center. After the registration request is reviewed, ASes corresponding to different ISPs and a business relationship between the ISPs are determined based on the registration information reported by the ISP, and then the business relationship between the ISPs is stored. Specifically, the registration information may be sent to the database server, and the database server establishes a database of the business relationship between the ISPs. A manner of the registration request may be application by mail, submission of a registration table, or the like, and a specific manner is not limited.

A business relationship between different ASes may include: a customer-to-provider C2P relationship, a provider-to-customer P2C relationship, and a peering relationship. The registration information may be an autonomous system AS identifier pair, and the AS identifier pair includes a first AS identifier and a second AS identifier that are sequentially arranged, where the first AS identifier may be an AS number corresponding to an autonomous system AS uploading the registration information, and the second identifier is an AS number corresponding to a neighboring AS of the AS.

It may be understood that two ASes may form an AS pair. For example, if AS numbers corresponding to the two ASes are respectively AS1 and AS2, two AS pairs, namely, (AS1, AS2) and (AS2, AS1), may be formed in different arrangement sequences.

If a business relationship of the AS pair (AS1, AS2) is the C2P relationship, an Internet service provider ISP corresponding to AS 1 is a customer of an ISP corresponding to AS2. In this case, a business relationship of (AS2, AS1) is the P2C relationship.

If a business relationship of the AS pair (AS1, AS2) is the P2C relationship, an Internet service provider ISP corresponding to AS1 is a provider of an ISP corresponding to AS2. In this case, a business relationship of (AS2, AS1) is the P2C relationship.

If a business relationship of the AS pair (AS1, AS2) is the peering relationship, an Internet service provider ISP corresponding to AS1 and an ISP corresponding to AS2 are peers to each other. In this case, a business relationship of (AS2, AS1) is also the peering relationship. Therefore, the ISP needs to upload different AS pairs to the database server according to different registration rules.

In this embodiment, an ISP whose business role is a customer may perform registration, and the ISP only needs to provide AS numbers corresponding to all provider neighbors and peering neighbors of the ISP to the database server. For example, in the topology diagram shown in FIG. 1, for AS1, a provider neighbor of AS1 includes AS6, and a peering neighbor of AS1 includes AS2. In this case, AS1 only needs to provide AS6 and AS2 to the database server during registration.

302: The database server establishes a first database based on the registration information.

After receiving the registration information, the database server establishes the first database based on the registration information. If an AS whose business role is a customer performs registration, the first database established by a network device is a C2P database, that is, a business relationship of each AS pair in the database is the C2P relationship or the peering relationship. For example, the provider neighbor of AS1 includes AS6, and the peering neighbor of AS1 includes AS2. In this case, the database server establishes two AS pairs, namely, (AS1, AS6) and (AS1, AS2), based on the registration information, where relationships of the two AS pairs are the C2P relationship or the peering relationship.

Because the business relationships of the AS pairs in the first database include both the C2P relationship and the peering relationship, to distinguish the business relationships in more detail, a preferred solution is classifying the AS pairs in the first database. The first database may include a first set and a second set, each of the first set and the second set includes at least one AS pair, a business relationship of the AS pair in the first set is the C2P relationship, and a business relationship of the AS pair in the second set is the peering relationship.

It may be understood that, because whether a reported AS identifier represents a provider neighbor or a peering neighbor is not identified in the first database, the AS pair whose business relationship is the peering relationship in the first database needs to be determined during division into the first set and the second set. In an optional implementation, the first database may be searched for two target AS pairs that include same AS identifiers, where locations of the AS identifiers in the target AS pairs are different, and then it is determined that two ASes in the target AS pairs are in the peering relationship. It may be understood that, assuming that the AS pair (AS1, AS2) is generated based on registration information of AS1, and the AS pair (AS2, AS1) is generated based on registration information of AS2, it indicates that AS1 and AS2 are peers to each other and are in the peering relationship. In this way, the AS pair corresponding to AS1 and AS2 needs to be established in the second set. Optionally, a peering relationship label may be marked for the AS pair in the second set, to distinguish the AS pair in the second set from the AS pair in the first set.

303: The database server establishes a second database based on the first database.

After the first database is established, a P2C database may be established based on the first database. Specifically, locations of AS identifiers in the AS pair in the first set of the first database may be reversed, and a reversed AS pair is stored in the P2C database. For example, the AS pair (AS1, AS2) exists in the C2P database, that is, AS1 is a customer of AS2. Then, a reversed AS pair (AS2, AS1) corresponding to the AS pair is determined based on the AS pair, and is stored in the P2C database, that is, AS2 is a provider of AS1.

It may be understood that the P2C database is in a one-to-one correspondence with the C2P database, and a business relationship between ASes included in the P2C database does not change. Optionally, the P2C database may also include the AS pair in the peering relationship. This is not specifically limited. When the network device performs path verification, if a downstream advertisement mode is used on the path, a to-be-verified AS pair does not need to be reversed during verification of an AS pair corresponding to the path, but may be directly verified by using the P2C database, so that a verification process is simpler and more convenient.

It may be understood that an AS whose business role is a provider may alternatively perform registration. A P2C database is established based on the registration information, and then a C2P database is established based on the P2C database. This is not specifically limited. In addition, the second database may or may not be established by the database server, that is, step 303 may be performed or may not be performed. This is not specifically limited.

304: The network device downloads the first database from the database server.

When the network device performs verification by using the database, the network device needs to first download the first database generated by the database server based on the registration information. If the database server has generated the second database based on the first database, the network device may download the first database and the second database.

It may be understood that, downloading the first database by the network device is a process in which the database server sends content in the database to the network device. The database server needs to send a first AS identifier pair to the network device based on the first database, and send a second AS identifier pair to the network device based on the second database, so that the network device performs path verification based on different identifier pairs.

305: The network device generates the second database based on the first database.

When the network device downloads only the first database, the network device may generate the second database based on the first database. For a specific manner, refer to the method for generating the second database by the database server in step 203. Details are not described herein again.

306: The network device obtains path information of a packet forwarding path.

When an AS advertises a route to another AS, a path of the route may be determined based on the packet forwarding path. Specifically, the network device may obtain an AS-PATH corresponding to the route, where AS numbers sequentially arranged in the AS-PATH are autonomous systems that the route sequentially passes through, that is, the network device determines that the packet forwarding path sequentially passes through a third autonomous system AS, a second AS, and a first AS. It may be understood that the received AS-PATH represents the ASes that the route sequentially passed through previously. Because route leakage also occurs on the current AS, a preferred solution is adding a current AS number to the AS-PATH, that is, the third AS is the 1^{st} AS that the packet forwarding path passes through.

After the packet forwarding path is determined based on the AS-PATH and the current AS number, an ordered AS number list needs to be deduplicated. That is, in the ordered AS number list, deletion is performed to retain only one of same AS numbers. In this way, it can be ensured that the path information of the packet forwarding path is an ordered AS identifier list, and the ordered AS identifier list includes a plurality of sequentially arranged AS identifiers, where the plurality of AS identifiers are mapped one-to-one to a plurality of ASes.

For example, if AS2 advertises a route to AS7, and an AS-PATH received by AS7 is AS4 AS5 AS 1 AS6 AS6 AS3, path information that is of the route and that is determined by AS7 is AS7 AS4 AS5 AS1 AS6 AS3.

307: The network device determines a first AS pair and a second AS pair based on the path information.

After determining the path information, the network device needs to group the path information to determine the AS pairs. For example, for the path information in step 305, AS pairs may be determined as (AS3, AS6), (AS6, AS1), (AS1, AS5), (AS5, AS4), and (AS4, AS7).

It may be understood that there is no chronological order between step 305 and step 306 and between step 303 and step 304. The network device may receive the path information of the packet forwarding path after downloading or generating the database in advance, or may download or generate the database after receiving the path information of the packet forwarding path. This is not specifically limited.

308: The network device determines a business relationship of the first AS pair and a business relationship of the second AS pair based on the first database and the second database.

After the AS pairs are determined, the business relationships of the AS pairs need to be sequentially determined. Specifically, the AS pairs are compared one by one with the first database and the second database. When the first set of the first database includes a to-be-verified AS pair, the network device determines that a business relationship of the AS pair is the C2P relationship. When the first database does not include a to-be-verified AS pair, but the second database includes a to-be-verified AS pair, the network device determines that a business relationship of the AS pair is the P2C relationship. Optionally, if the second set of the first database includes a to-be-verified AS pair, the network device determines that a business relationship of the AS pair is the peering relationship.

309: The network device determines, based on the business relationship of the first AS pair and the business relationship of the second AS pair, whether the packet forwarding path is valid.

After completing verification of the AS pairs one by one, the network device may obtain the business relationship of each AS pair, and then needs to determine, based on business relationships of neighboring AS pairs, whether the path is valid. For example, in the path information shown in step 306, if a business relationship of (AS5, AS4) is the peering relationship, and a business relationship of (AS4, AS7) is the C2P relationship, it is determined that AS4 advertises, to the provider neighbor AS7 of AS4, a route learned from the peering neighbor AS5 of AS4. This violates a route advertisement principle, and it is determined that the path is invalid.

The following analyzes the cases in which the verification result is untrustworthy in the method in FIG. 1.

First, the database server determines the peering relationship in the C2P database in FIG. 1, and marks the peering relationship, to obtain the following content in a new C2P database:
(AS1, AS2)-peering, (AS1, AS6);
(AS2, AS1)-peering, (AS2, AS5)-peering, (AS2, AS6);
(AS3, AS1), (AS3, AS2), (AS3, AS4)-peering;
(AS4, AS2), (AS4, AS3)-peering, (AS4, AS5);
(AS5, AS2)-peering, (AS5, AS6);
(AS6, 0);
(AS7, AS3).

Then, a P2C database is generated based on the C2P database, where content in the P2C database is:
(AS1, AS3);
(AS2, AS3), (AS2, AS4);
(AS3, AS7);
(AS5, AS4);
(AS6, AS1), (AS6, AS2), (AS6, AS5).

It is assumed that when AS7 advertises a route to AS2, an AS-PATH that is of the route and that is received by AS2 is AS4 AS3 AS7.

First, the AS-PATH is divided into AS pairs, namely, (AS7, AS3), (AS3, AS4), and (AS4, AS2). Then, the three AS pairs are verified separately. The foregoing C2P database includes (AS7, AS3). In this case, a verification result of (AS7, AS3) is valid, and a business relationship of (AS7, AS3) is the C2P relationship. Similarly, a verification result of (AS3, AS4) is also valid, and a business relationship of (AS3, AS4) is the peering relationship; a verification result of (AS4, AS2) is valid, and a business relationship of (AS4, AS2) is the C2P relationship. Then, based on business relationships of two neighboring AS pairs, in (AS3, AS4) and (AS4, AS2), the business relationship of (AS3, AS4) is the peering relationship, and the business relationship of (AS4, AS2) is the C2P relationship. AS4 advertises, to the provider neighbor AS2 of AS4, a route learned from the peering neighbor AS3. This violates the advertisement principle. In this case, it is determined that a verification result is invalid, and the verification result is trustworthy.

It is assumed that when AS1 advertises a route to AS6, an AS-PATH that is of the route and that is received by AS6 is AS2 AS1.

Similarly, the AS-PATH is divided into (AS1, AS2) and (AS2, AS6). Then, verification is performed based on the foregoing C2P database. The AS pairs registered by AS1 in the database include (AS1, AS2). A verification result of (AS1, AS2) is valid, and a business relationship of (AS1, AS2) is the peering relationship; a verification result of (AS2, AS6) is valid, and a business relationship of (AS2, AS6) is the peering relationship. Then, it is determined based on the business relationships that advertising, by AS2 to the provider neighbor AS6 of AS2, a route learned from the peering neighbor AS1 violates the advertisement principle. In this case, it is determined that a verification result is invalid, and the verification result is trustworthy.

It is assumed that when AS3 advertises a route to AS4, an AS-PATH that is of the route and that is received by AS4 is AS5 AS2 AS6 AS1 AS3. Similarly, the AS-PATH is divided into (AS3, AS1), (AS1, AS6), (AS6, AS2), (AS2, AS5), and (AS5, AS4). Based on the foregoing C2P database, a verification result of (AS3, AS1) is valid, a verification result of (AS1, AS6) is valid, business relationships of (AS3, AS1) and (AS1, AS6) are both the C2P relationship, and a verification result of (AS6, AS2) is invalid.

After (AS6, AS2) is verified to be invalid, verification may be directly performed based on the P2C database. (AS6, AS2) is valid and a business relationship of (AS6, AS2) is the P2C relationship; (AS2, AS5) is valid and a business relationship of (AS2, AS5) is the peering relationship; (AS5, AS4) is valid and a business relationship of (AS5, AS4) is the P2C relationship. Then, based on business relationships of neighboring AS pairs, AS2 provides, to the peering neighbor AS5 of AS2, routing information learned from the provider neighbor AS6, and the routing path is determined to be invalid. In this case, a verification result is trustworthy.

In this embodiment, the network device not only needs to verify the single AS pair corresponding to the path information, but also needs to determine, based on the business relationships of the neighboring AS pairs, whether the path is valid. In this way, a leakage status of the P2P routing information can be verified more accurately, so that the verification result is more trustworthy.

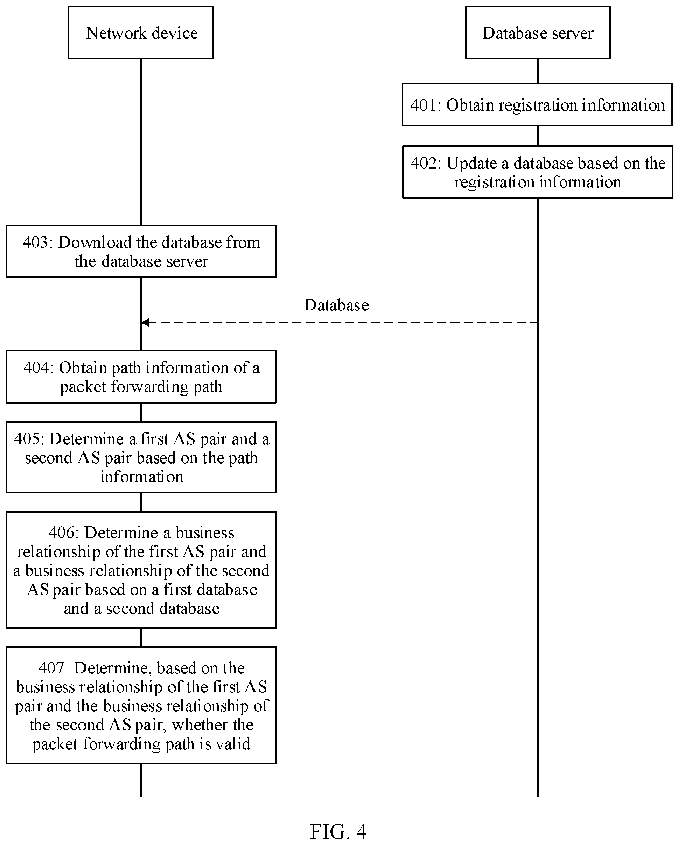

FIG. 4 is a schematic flowchart of another path verification method according to an embodiment of this application. As shown in FIG. 4, the method includes the following steps.

401: A database server obtains registration information.

In this embodiment, the registration information needs to include one AS identifier pair and a business relationship of the AS identifier pair, where the AS identifier pair includes a first AS identifier and a second AS identifier that are sequentially arranged.

In this embodiment, when an ISP registers a business relationship with the database server, any AS instead of a customer only may perform registration, and may report a provider neighbor, a peering neighbor, or a customer neighbor of the AS. For example, the first AS identifier may be an AS number corresponding to the AS, and the second AS identifier may be an AS number of the provider neighbor corresponding to the AS, an AS number of the customer neighbor corresponding to the AS, or an AS number of the peering neighbor corresponding to the AS. Because an AS pair includes only AS identifiers, a corresponding business relationship between two ASes further needs to be reported.

For example, in the topology diagram shown in FIG. 1, when AS1 uploads registration information to the database server, the registration information may be (AS1, AS6), C2P; (AS1, AS2), peering; and (AS1, AS2), P2C. It may be understood that (AS 1, AS6), C2P means that AS 1 is a customer neighbor of AS6; (AS1, AS2), peering means that AS1 is a peering neighbor of AS2; (AS 1, AS2), P2C means that AS1 is a provider neighbor of AS2.

402: The database server updates a database based on the registration information.

When obtaining the registration information, the database server updates content in the database based on the registration information, to establish a corresponding AS pair and establish a mapping relationship between the AS pair and a business relationship of the AS identifier pair. In this way, a business relationship between corresponding ASes may be learned of based on each AS pair.

It may be understood that, because the business relationship of the AS pair in the database is definite, some business relationships between unregistered ASes may be learned of based on the stored AS pair. For example, the database includes (AS1, AS6), C2P. In this case, it may be learned that AS1 is a customer neighbor of AS6. When AS6 does not perform registration with the database server, in a verification process, it may still be deduced that a business relationship of the to-be-verified AS pair (AS1, AS6) is the P2C relationship.

In the database, if there is a mapping relationship between an AS pair and a business relationship, data in the database may be further checked. For example, when the database includes a first AS identifier pair in which an arrangement sequence is a first AS number and a second AS number, and further includes a second AS identifier pair in which an arrangement sequence is the second AS number and the first AS number, and the database server determines that a business relationship of the first AS identifier pair is the same as a business relationship of the second AS identifier pair, it is determined that a mapping relationship between the first AS identifier pair and the business relationship of the first AS identifier pair is abnormal and a mapping relationship between the second AS identifier pair and the business relationship of the second AS identifier pair is abnormal.

For example, if the database includes (AS1, AS6), C2P, it may be learned that AS1 is a customer neighbor of AS6, but the database further includes (AS6, AS1), C2P, that is, AS6 is a customer neighbor of AS1. These conflict with each other, and it indicates that mapping of a business relationship between the two ASes is incorrect.

403: A network device downloads the database from the database server.

When the database server completes updating the database, the network device needs to download the database, and performs path verification based on the AS pair in the database.

It may be understood that, downloading the database by the network device is a process in which the database server sends the content in the database to the network device. The database server sends the mapping relationship between the first AS identifier pair and the business relationship of the first AS identifier pair to the network device based on the updated database, so that the network device performs path verification based on the AS identifier pair in the database.

404: The network device obtains path information of a packet forwarding path.

Step 404 is similar to step 306 in the embodiment shown in FIG. 3, and details are not described herein again.

405: The network device determines a first AS pair and a second AS pair based on the path information.

Step 405 is similar to step 307 in the embodiment shown in FIG. 3, and details are not described herein again.

It may be understood that there is no chronological order between step 403 and each of step 405 and step 404. The network device may receive the path information of the packet forwarding path after downloading the database in advance, or may download the database after receiving the path information of the packet forwarding path. This is not specifically limited.

406: The network device determines a business relationship of the first AS pair and a business relationship of the second AS pair.

It may be understood that the database includes at least two types of business relationships. Because there is a mapping relationship between an AS pair and a business relationship, the business relationship of the first AS pair and the business relationship of the second AS pair are directly determined based on the database.

The network device determines, based on the business relationship of the first AS pair and the business relationship of the second AS pair, whether the packet forwarding path is valid.

A verification process in step 407 is similar to that in step 309 in FIG. 3, and details are not described herein again.

In this embodiment, because the database includes the mapping relationship between an AS pair and a business relationship, business relationships of neighboring AS pairs may be directly obtained based on the database, and a business relationship of a to-be-verified AS pair may be deduced based on a business relationship of another AS pair without one-by-one comparison and matching. The verification process is simpler, verification failures caused due to that an AS performs no registration are greatly reduced, and trustworthy of a verification result is improved.

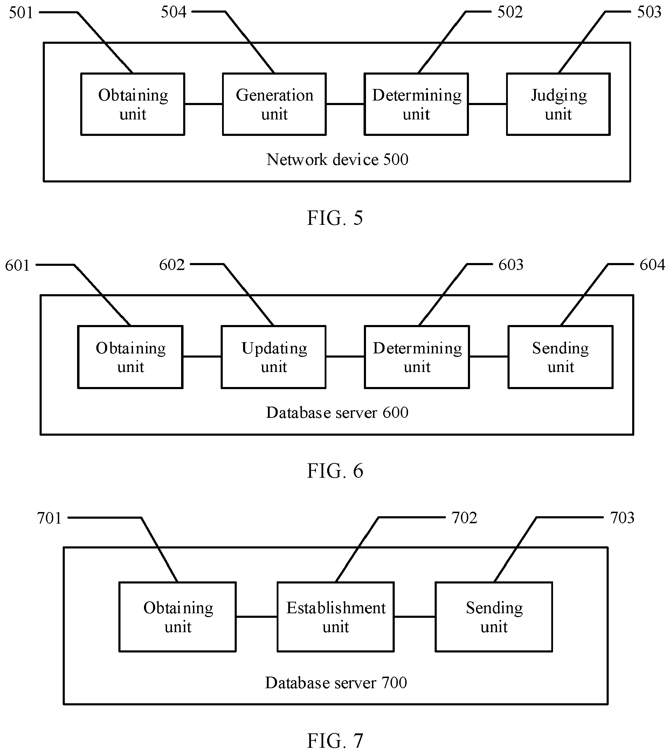

FIG. 5 is a schematic diagram of a structure of a network device 500 according to an embodiment of this application. As shown in FIG. 5, the network device 500 includes:
an obtaining unit 501, configured to obtain path information of a packet forwarding path, where the packet forwarding path passes through a third autonomous system AS, a second AS, and a first AS in sequence, and the third AS, the second AS, and the first AS are sequentially adjacent;
a determining unit 502, configured to determine a business relationship of a first AS pair and a business relationship of a second AS pair, where the first AS pair includes the first AS and the second AS that are sequentially arranged, and the second AS pair includes the second AS and the third AS that are sequentially arranged; and
a judging unit 503, configured to determine, based on the business relationship of the first AS pair and the business relationship of the second AS pair, whether the packet forwarding path is valid.

The obtaining unit 501 performs the method described in step 306 in the embodiment shown in FIG. 3 or step 404 in the embodiment shown in FIG. 4, the determining unit 502 performs the method described in step 308 in the embodiment shown in FIG. 3 or step 406 in the embodiment shown in FIG. 4, and the judging unit 503 performs the method described in step 309 in the embodiment shown in FIG. 3 or step 407 in the embodiment shown in FIG. 4.

In another embodiment of the network device 500 provided in embodiments of this application, the business relationship includes a customer-to-provider C2P relationship, a provider-to-customer P2C relationship, and a peering relationship.

If the business relationship of the first AS pair is the C2P relationship, an Internet service provider ISP corresponding to the first AS is a customer of an ISP corresponding to the second AS.

If the business relationship of the first AS pair is the P2C relationship, an ISP corresponding to the first AS is a provider of an ISP corresponding to the second AS.

If the business relationship of the first AS pair is the peering relationship, an ISP corresponding to the first AS and an ISP corresponding to the second AS are peers to each other.

In another embodiment of the network device 500 provided in embodiments of this application:

The obtaining unit 501 is configured to obtain databases, where the databases include a first database and a second database, the first database includes a first set, the first set includes at least one AS pair, and the second database includes at least one AS pair.

The determining unit 502 is specifically configured to: when the first set includes the first AS pair, determine that the business relationship of the first AS pair is the C2P relationship; or when the first database does not include the first AS pair, but the second database includes the first AS pair, determine that the business relationship of the first AS pair is the P2C relationship.

The obtaining unit 501 performs the method described in step 304 and step 305 in the embodiment shown in FIG. 3, and the determining unit 502 performs the method described in step 308 in the embodiment shown in FIG. 3.

In another embodiment of the network device 500 provided in embodiments of this application, the first database further includes a second set, and the second set includes at least one AS pair.

The determining unit 502 is specifically configured to: when the second set includes the first AS pair, determine that the business relationship of the first AS pair is the peering relationship.

The determining unit 502 performs the method described in step 308 in the embodiment shown in FIG. 3.

In another embodiment of the network device 500 provided in embodiments of this application, the third AS is the 1^{st} AS that the packet forwarding path passes through.

In another embodiment of the network device 500 provided in embodiments of this application, the packet forwarding path passes through a plurality of ASes in sequence, the path information of the packet forwarding path includes an ordered AS identifier list, the ordered AS identifier list includes a plurality of sequentially arranged AS identifiers, and the plurality of AS identifiers are mapped one-to-one to the plurality of ASes.

In another embodiment of the network device 500 provided in embodiments of this application, the network device further includes a generation unit 504, and the obtaining unit 501 is specifically configured to download the first database from a database server.

The generation unit 504 is configured to generate the second database based on the first database.

The generation unit 504 performs the method described in step 305 in the embodiment shown in FIG. 3, and the obtaining unit 501 performs the method described in step 304 in the embodiment shown in FIG. 3.

In another embodiment of the network device 500 provided in embodiments of this application, the obtaining unit 501 is specifically configured to obtain a database, where the database includes a mapping relationship between the first AS pair and a first business relationship and a mapping relationship between the second AS pair and a second business relationship.

The determining unit 502 is specifically configured to determine that the business relationship of the first AS pair is the first business relationship, and determine that the business relationship of the second AS pair is the second business relationship.

The obtaining unit 501 performs the method described in step 403 in the embodiment shown in FIG. 4, and the determining unit 502 performs the method described in step 406 in the embodiment shown in FIG. 4.

In another embodiment of the network device 500 provided in embodiments of this application, the obtaining unit 501 is specifically configured to download the database from a database server.

The obtaining unit 501 performs the method described in step 403 in the embodiment shown in FIG. 4.

FIG. 6 is a schematic diagram of a structure of a database server 600 according to an embodiment of this application. As shown in FIG. 6, the database server 600 includes:
an obtaining unit 601, configured to obtain registration information, where the registration information includes a first AS identifier pair and a business relationship of the first AS identifier pair, and the first AS identifier pair includes a first AS identifier and a second AS identifier that are sequentially arranged; and
an updating unit 602, configured to update a database based on the registration information, where the updated database includes a mapping relationship between the first autonomous system AS identifier pair and the business relationship of the first AS identifier pair.

The obtaining unit 601 performs the method described in step 401 in the embodiment shown in FIG. 4, and the updating unit 602 performs the method described in step 402 in the embodiment shown in FIG. 4.

In another embodiment of the database server 600 provided in embodiments of this application, information about the business relationship of the first AS identifier pair is a customer-to-provider C2P relationship, a peering relationship, or a provider-to-customer P2C relationship.

If the business relationship of the first AS identifier pair is the C2P relationship, an Internet service provider ISP corresponding to a first AS is a customer of an ISP corresponding to a second AS.

If the business relationship of the first AS identifier pair is the P2C relationship, an ISP corresponding to a first AS is a provider of an ISP corresponding to a second AS.

If the business relationship of the first AS identifier pair is the peering relationship, an ISP corresponding to a first AS and an ISP corresponding to a second AS are peers to each other.

In another embodiment of the database server 600 provided in embodiments of this application, the updated database further includes a mapping relationship between a second AS identifier pair and a business relationship of the second AS identifier pair, and the second AS identifier pair includes the second AS identifier and the first AS identifier that are sequentially arranged.

The server further includes a determining unit 603, where the determining unit 603 is configured to: determine that the business relationship of the first AS identifier pair is the same as the business relationship of the second AS identifier pair; and determine that the mapping relationship between the first AS identifier pair and the business relationship of the first AS identifier pair is abnormal, and determine that the mapping relationship between the second AS identifier pair and the business relationship of the second AS identifier pair is abnormal.

The determining unit 603 performs the method described in step 402 in the embodiment shown in FIG. 4.

In another embodiment of the database server 600 provided in embodiments of this application, the database server further includes a sending unit 604, where the sending unit 604 is configured to send the mapping relationship between the first AS identifier pair and the business relationship of the first AS identifier pair to a network device based on the updated database.

The sending unit 604 performs the method described in step 403 in the embodiment shown in FIG. 4.

FIG. 7 is a schematic diagram of a structure of a database server 700 according to an embodiment of this application. As shown in FIG. 7, the database server 700 includes:
an obtaining unit 701, configured to obtain registration information, where the registration information includes a first autonomous system AS identifier pair, and the first AS identifier pair includes a first AS identifier and a second AS identifier that are sequentially arranged; and
an establishment unit 702, configured to: establish a first database based on the registration information, where the first database includes the first AS identifier pair; and establish a second database, where the second database includes a second AS identifier pair, and the second AS identifier pair includes the second AS identifier and the first AS identifier that are sequentially arranged.

The obtaining unit 701 performs the method described in step 301 in the embodiment shown in FIG. 3, and the establishment unit 702 performs the method described in step 302 and step 303 in the embodiment shown in FIG. 3.

In another embodiment of the database server 700 provided in embodiments of this application, a business relationship of an AS identifier pair included in the first database is a customer-to-provider C2P relationship and/or a peering relationship, and a business relationship of an AS identifier pair included in the second database is a provider-to-customer P2C relationship and/or the peering relationship.

In another embodiment of the database server 700 provided in embodiments of this application, the server 700 further includes a sending unit 703, configured to send the first AS identifier pair to a network device based on the first database, and send the second AS identifier pair to the network device based on the second database.

The sending unit 703 performs the method described in step 304 in the embodiment shown in FIG. 3.

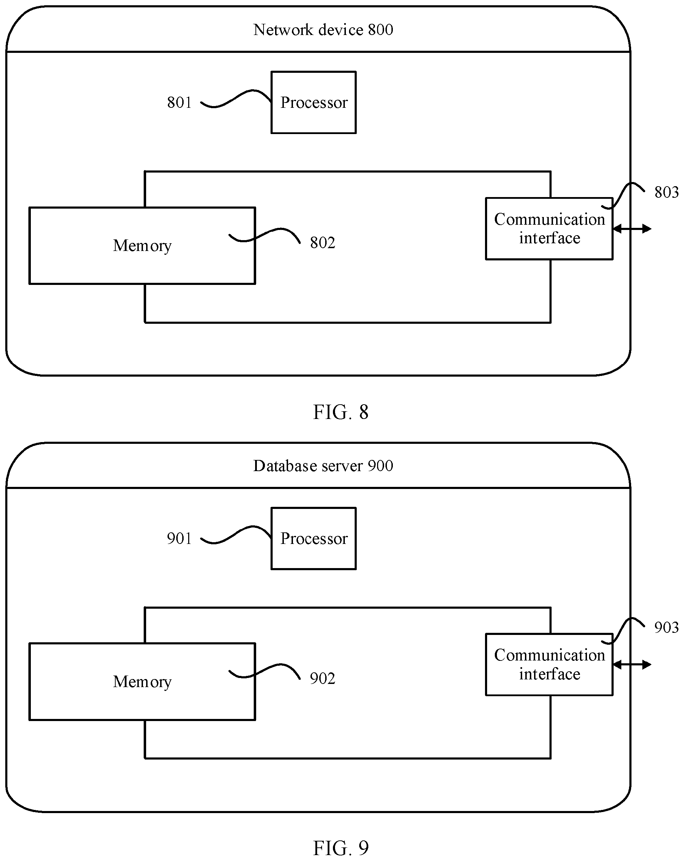

FIG. 8 is a schematic diagram of a structure of another network device 800 according to an embodiment of this application. The network device 800 includes a processor 801, a memory 802, and a communication interface 803.

The processor 801, the memory 802, and the communication interface 803 are mutually connected through a bus. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of representation, only one bold line is used to represent the bus in FIG. 8, but this does not mean that there is only one bus or only one type of bus.

The memory 802 may include a volatile memory (volatile memory), for example, a random access memory (random access memory, RAM), or may include a non-volatile memory (non-volatile memory), for example, a flash memory (flash memory), a hard disk drive (hard disk drive, HDD), or a solid-state drive (solid-state drive, SSD). Alternatively, the memory 802 may include a combination of the foregoing types of memories.

The processor 801 may be a central processing unit (central processing unit, CPU), a network processor (English: network processor, NP), or a combination of a CPU and an NP. The processor 801 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication interface 803 may be a wired communication interface, a wireless communication interface, or a combination thereof. The wired communication interface may be, for example, an Ethernet interface. The Ethernet interface may be an optical interface, an electrical interface, or a combination thereof. The wireless communication interface may be a WLAN interface, a cellular network communication interface, a combination thereof, or the like.

Optionally, the memory 802 may be further configured to store program instructions. The processor 801 invokes the program instructions stored in the memory 802, and may perform one or more of steps 301, 304, 305, 306, 307, 308, and 309 or steps 401, 403, 404, 405, 406, and 407 in the method embodiment shown in FIG. 3 or FIG. 4 or an optional implementation in the steps, so that the network device 800 implements a function of the network device in the foregoing methods. Details are not described herein again.

FIG. 9 is a schematic diagram of a structure of a database server 900 according to an embodiment of this application. The database server 900 includes a processor 901, a memory 902, and a communication interface 903.

The memory 902 may be used for temporary storage or permanent storage. Further, the processor 901 may be configured to communicate with the memory 902, and perform, on a sending device, a series of instruction operations in the memory 902.

In this embodiment, the processor 901 may perform operations performed by the database server in the embodiments shown in FIG. 3 and FIG. 4. Details are not described herein again.

In this embodiment, specific functional module division in the processor 901 may be similar to functional module division in the receiving unit, the updating unit, and the determining unit described in FIG. 6. Details are not described herein again.

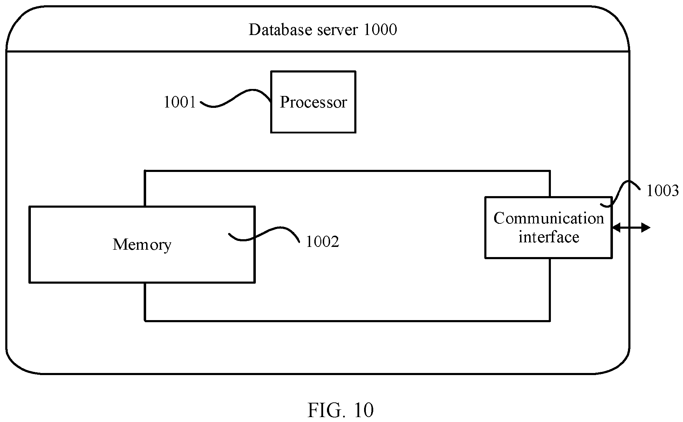

FIG. 10 is a schematic diagram of a structure of another database server 1000 according to an embodiment of this application. The database server 1000 includes a processor 1001, a memory 1002, and a communication interface 1003.

The memory 1002 may be used for temporary storage or permanent storage. Further, the central processing unit 1001 may be configured to communicate with the memory 1002, and perform, on a sending device, a series of instruction operations in the memory 1002.

In this embodiment, the central processing unit 1001 may perform operations performed by the database server in the embodiments shown in FIG. 3 and FIG. 4. Details are not described herein again.

In this embodiment, specific functional module division in the central processing unit 1001 may be similar to functional module division in the receiving unit and the establishment unit described in FIG. 7. Details are not described herein again.

An embodiment of this application further provides a path verification system, including the network device shown in FIG. 5 or FIG. 8, and the database server shown in FIG. 6 or FIG. 9 or the database server shown in FIG. 7 or FIG. 10.

A not claimed embodiment of this application further provides a chip or a chip system. The chip or the chip system includes at least one processor and a communication interface. The communication interface and the at least one processor are interconnected through a line, and the at least one processor runs instructions or a computer program to perform one or more steps in the method embodiment shown in FIG. 3 or FIG. 4 or an optional implementation in the steps to implement a function of the network device in the foregoing methods.

The communication interface in the chip may be an input/output interface, a pin, a circuit, or the like.

In a possible implementation, the chip or the chip system described above further includes at least one memory, and the at least one memory stores the instructions. The memory may be a storage unit inside the chip, for example, may be a register or a cache; or may be a storage unit (for example, a read-only memory or a random access memory) of the chip.

A not claimed embodiment of this application further provides a chip or a chip system. The chip or the chip system includes at least one processor and a communication interface. The communication interface and the at least one processor are interconnected through a line. The at least one processor is configured to run a computer program or instructions, to perform the method performed by the database server according to any possible implementation in the embodiments shown in FIG. 3 and FIG. 4.

The communication interface in the chip may be an input/output interface, a pin, a circuit, or the like.

In a possible implementation, the chip or the chip system described in this application further includes at least one memory, and the at least one memory stores the instructions. The memory may be a storage unit inside the chip, for example, may be a register or a cache; or may be a storage unit (for example, a read-only memory or a random access memory) of the chip.

A not claimed embodiment of this application further provides a computer storage medium. The computer storage medium stores computer program instructions for implementing a function of a network device in a path verification method provided in embodiments of this application.

A not claimed embodiment of this application further provides a computer storage medium. The computer storage medium stores computer program instructions for implementing a function of a database server in a database establishment method provided in embodiments of this application.

A not claimed embodiment of this application further provides a computer program product. The computer program product includes computer software instructions. The computer software instructions may be loaded by using a processor to implement a procedure in the path verification method shown in FIG. 3 or FIG. 4.

All or some of the foregoing embodiments may be implemented by using software, hardware, firmware, or any combination thereof. When software is used to implement the embodiments, all or some of the embodiments may be implemented in a form of a computer program product.

A person skilled in the art that may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, the division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, to be specific, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (ROM, read-only memory), a random access memory (RAM, random access memory), a magnetic disk, or an optical disc.

## Claims

1. A path verification method, wherein the method comprises:
obtaining (306), by a network device, path information of a packet forwarding path, wherein the packet forwarding path passes through a third autonomous system, AS, a second AS, and a first AS in sequence, and the third AS, the second AS, and the first AS are sequentially adjacent;
determining (308), by the network device, a business relationship of a first AS pair and a business relationship of a second AS pair, wherein the first AS pair comprises the first AS and the second AS that are sequentially arranged, and the second AS pair comprises the second AS and the third AS that are sequentially arranged; and
determining (309), by the network device based on the business relationship of the first AS pair and the business relationship of the second AS pair, whether the packet forwarding path is valid,
wherein the business relationship comprises a customer-to-provider, C2P, relationship, a provider-to-customer, P2C, relationship, and a peering relationship, wherein
if the business relationship of the first AS pair is the C2P relationship, an Internet service provider, ISP, corresponding to the first AS is a customer of an ISP corresponding to the second AS;
if the business relationship of the first AS pair is the P2C relationship, an ISP corresponding to the first AS is a provider of an ISP corresponding to the second AS; or
if the business relationship of the first AS pair is the peering relationship, an ISP corresponding to the first AS and an ISP corresponding to the second AS are peers to each other;
wherein the determining (308), by the network device, a business relationship of a first AS pair comprises:
obtaining, by the network device, databases, wherein the databases comprise a first database established based on registration information reported by an internet service provider, ISP, and a corresponding second database established based on the first database, the first database comprises a first set and optionally a second set for classifying AS pairs in the first database thereby distinguishing business relationships thereof, the first set comprises at least one AS pair, the second database comprises at least one AS pair, and locations of AS identifiers in the AS pair of the second database are reversed with respect to locations of AS identifiers in the corresponding AS pair in the first set of the first database; and
when the first set comprises the first AS pair, determining, by the network device, that the business relationship of the first AS pair is the C2P relationship; or
when the first database does not comprise the first AS pair, but the second database comprises the first AS pair, determining, by the network device, that the business relationship of the first AS pair is the P2C relationship.

2. The method according to claim 1, wherein the first database further comprises the second set, and the second set comprises at least one AS pair; and
the determining, by the network device, a business relationship of a first AS pair comprises:
when the second set comprises the first AS pair, determining, by the network device, that the business relationship of the first AS pair is the peering relationship.

3. The method according to claim 1 or 2, wherein the third AS is the 1^{st} AS that the packet forwarding path passes through.

4. The method according to claim 3, wherein the packet forwarding path passes through a plurality of ASes in sequence, the path information of the packet forwarding path comprises an ordered AS identifier list, the ordered AS identifier list comprises a plurality of sequentially arranged AS identifiers, and the plurality of AS identifiers are mapped one-to-one to the plurality of ASes.

5. The method according to claim 2 or 3, wherein before the determining (308), by the network device, a business relationship of a first AS pair and a business relationship of a second AS pair, the method further comprises:
downloading (304), by the network device, the first database from a database server; and
generating (305), by the network device, the second database based on the first database.

6. A network device (800), comprising at least one processor (801) and a memory (802), wherein the memory (802) stores computer-executable instructions capable of being run on the processor (801); and when the computer-executable instructions are executed by the processor (801), the network device (800) is enabled to perform the method according to any one of claims 1 to 5.

7. A path verification system, comprising the network device (802) according to claim 6 and a database server.

## Patentansprüche

1. Pfadverifizierungsverfahren, wobei das Verfahren Folgendes umfasst:
Erhalten (306), durch ein Netzwerkgerät, von Pfadinformationen eines Paketweiterleitungspfads, wobei der Paketweiterleitungspfad in einer Sequenz durch ein drittes autonomes System, AS, ein zweites AS und ein erstes AS verläuft, und wobei das dritte AS, das zweite AS und das erste AS sequenziell benachbart sind;
Bestimmen (308), durch das Netzwerkgerät, einer Geschäftsbeziehung eines ersten AS-Paars und einer Geschäftsbeziehung eines zweiten AS-Paars, wobei das erste AS-Paar das erste AS und das zweite AS umfasst, die sequenziell angeordnet sind, und das zweite AS-Paar das zweite AS und das dritte AS umfasst, die sequenziell angeordnet sind; und
Bestimmen (309), durch das Netzwerkgerät basierend auf der Geschäftsbeziehung des ersten AS-Paars und der Geschäftsbeziehung des zweiten AS-Paars, ob der Paketweiterleitungspfad gültig ist,
wobei die Geschäftsbeziehung eine Kunde-zu-Anbieter-, C2P, Beziehung, eine Anbieter-zu-Kunde-, P2C, Beziehung und eine "Peering"-Beziehung umfasst, wobei
wenn die Geschäftsbeziehung des ersten AS-Paars die C2P-Beziehung ist, ein Internetdienstanbieter, ISP, der dem ersten AS entspricht, ein Kunde eines ISP ist, der dem zweiten AS entspricht;
wenn die Geschäftsbeziehung des ersten AS-Paars die P2C-Beziehung ist, ein ISP, der dem ersten AS entspricht, ein Anbieter eines ISP ist, der dem zweiten AS entspricht; oder
wenn die Geschäftsbeziehung des ersten AS-Paars die "Peering"-Beziehung ist, ein ISP, der dem ersten AS entspricht, und ein ISP, der dem zweiten AS entspricht, zueinander gleichrangig sind;
wobei das Bestimmen (308), durch das Netzwerkgerät, einer Geschäftsbeziehung eines ersten AS-Paars Folgendes umfasst:
Erhalten, durch das Netzwerkgerät, von Datenbanken, wobei die Datenbanken eine erste Datenbank, die basierend auf Registrierungsinformationen erstellt wurde, die durch einen Internetdienstanbieter, ISP, berichtet wurden, und eine entsprechende zweite Datenbank, die basierend auf der ersten Datenbank erstellt wurde, umfassen, wobei die erste Datenbank einen ersten Satz und optional einen zweiten Satz zum Klassifizieren von AS-Paaren in der ersten Datenbank umfasst, wodurch Geschäftsbeziehungen davon unterschieden werden, wobei der erste Satz mindestens ein AS-Paar umfasst, die zweite Datenbank mindestens ein AS-Paar umfasst und Positionen von AS-Kennungen in dem AS-Paar der zweiten Datenbank in Bezug auf Positionen von AS-Kennungen in dem entsprechenden AS-Paar in dem ersten Satz der ersten Datenbank umgekehrt sind; und
wenn der erste Satz das erste AS-Paar umfasst, Bestimmen, durch das Netzwerkgerät, dass die Geschäftsbeziehung des ersten AS-Paars die C2P-Beziehung ist; oder
wenn die erste Datenbank nicht das erste AS-Paar umfasst, jedoch die zweite Datenbank das erste AS-Paar umfasst, Bestimmen, durch das Netzwerkgerät, dass die Geschäftsbeziehung des ersten AS-Paars die P2C-Beziehung ist.

2. Verfahren nach Anspruch 1, wobei die erste Datenbank ferner den zweiten Satz umfasst und der zweite Satz mindestens ein AS-Paar umfasst; und
wobei das Bestimmen, durch das Netzwerkgerät, einer Geschäftsbeziehung eines ersten AS-Paars Folgendes umfasst:
wenn der zweite Satz das erste AS-Paar umfasst, Bestimmen, durch das Netzwerkgerät, dass die Geschäftsbeziehung des ersten AS-Paars die "Peering"-Beziehung ist.

3. Verfahren nach Anspruch 1 oder 2, wobei das dritte AS das 1. AS ist, durch das der Paketweiterleitungspfad verläuft.

4. Verfahren nach Anspruch 3, wobei der Paketweiterleitungspfad durch eine Mehrzahl von ASs in einer Sequenz verläuft, wobei die Pfadinformationen des Paketweiterleitungspfads eine geordnete AS-Kennungsliste umfassen, wobei die geordnete AS-Kennungsliste eine Mehrzahl von sequenziell angeordneten AS-Kennungen umfasst, und wobei die Mehrzahl von AS-Kennungen eins-zu-eins auf die Mehrzahl von ASs abgebildet wird.

5. Verfahren nach Anspruch 2 oder 3, wobei vor dem Bestimmen (308), durch das Netzwerkgerät, einer Geschäftsbeziehung eines ersten AS-Paars und einer Geschäftsbeziehung eines zweiten AS-Paars das Verfahren ferner Folgendes umfasst:
Herunterladen (304), durch das Netzwerkgerät, der ersten Datenbank von einem Datenbankserver; und
Erzeugen (305), durch das Netzwerkgerät, der zweiten Datenbank basierend auf der ersten Datenbank.

6. Netzwerkgerät (800), das mindestens einen Prozessor (801) und einen Speicher (802) umfasst, wobei der Speicher (802) computerausführbare Anweisungen speichert, die auf dem Prozessor (801) ausgeführt werden können; und wobei, wenn die computerausführbaren Anweisungen durch den Prozessor (801) ausgeführt werden, dem Netzwerkgerät (800) ermöglicht wird, das Verfahren nach einem der Ansprüche 1 bis 5 durchzuführen.

7. Pfadverifizierungssystem, welches das Netzwerkgerät (802) nach Anspruch 6 und einen Datenbankserver umfasst.

## Revendications

1. Procédé de vérification de trajet, le procédé comprenant :
l'obtention (306), par un dispositif de réseau, d'informations de trajet d'un trajet de transfert de paquets, le trajet de transfert de paquets passant par un troisième système autonome, AS, un deuxième AS, et un premier AS en séquence, et le troisième AS, le deuxième AS, et le premier AS étant séquentiellement adjacents ;
la détermination (308), par le dispositif de réseau, d'une relation commerciale d'une première paire d'AS et d'une relation commerciale d'une deuxième paire d'AS, la première paire d'AS comprenant le premier AS et le deuxième AS qui sont agencés séquentiellement, et la deuxième paire d'AS comprenant le deuxième AS et le troisième AS qui sont agencés séquentiellement, et
la détermination (309), par le dispositif de réseau sur la base de la relation commerciale de la première paire d'AS et de la relation commerciale de la deuxième paire d'AS, si le trajet de transfert de paquets est valide,
la relation commerciale comprenant une relation client-fournisseur, C2P, une relation fournisseur-client, P2C, et une relation de pairage,
si la relation commerciale de la première paire d'AS est la relation C2P, un fournisseur d'accès à Internet, FAI, correspondant au premier AS étant un client d'un FAI correspondant au deuxième AS ;
si la relation commerciale de la première paire d'AS est la relation P2C, un FAI correspondant au premier AS étant un fournisseur d'un FAI correspondant au deuxième AS ; ou
si la relation commerciale de la première paire d'AS est la relation de pairage, un FAI correspondant au premier AS et un FAI correspondant au deuxième AS étant des pairs l'un pour l'autre;
la détermination (308), par le dispositif de réseau, d'une relation commerciale d'une première paire d'AS comprenant :
l'obtention, par le dispositif de réseau, de bases de données, les bases de données comprenant une première base de données établie sur la base d'informations d'enregistrement rapportées par un fournisseur d'accès à Internet, FAI, et une deuxième base de données correspondante établie sur la base de la première base de données, la première base de données comprenant un premier ensemble et éventuellement un deuxième ensemble pour classer des paires d'AS dans la première base de données en distinguant ainsi leurs relations commerciales, le premier ensemble comprenant au moins une paire d'AS, la deuxième base de données comprenant au moins une paire d'AS, et des emplacements d'identifiants d'AS dans la paire d'AS de la deuxième base de données étant inversés par rapport à des emplacements d'identifiants d'AS dans la paire d'AS correspondante dans le premier ensemble de la première base de données ; et
lorsque le premier ensemble comprend la première paire d'AS, la détermination, par le dispositif de réseau, que la relation commerciale de la première paire d'AS est la relation C2P ; ou
lorsque la première base de données ne comprend pas la première paire d'AS, mais que la deuxième base de données comprend la première paire d'AS, la détermination, par le dispositif de réseau, que la relation commerciale de la première paire d'AS est la relation P2C.

2. Procédé selon la revendication 1, la première base de données comprenant en outre le deuxième ensemble, et le deuxième ensemble comprenant au moins une paire d'AS ; et
la détermination, par le dispositif de réseau, d'une relation commerciale d'une première paire d'AS comprenant :
lorsque le deuxième ensemble comprend la première paire d'AS, la détermination, par le dispositif de réseau, que la relation commerciale de la première paire d'AS est la relation de pairage.

3. Procédé selon la revendication 1 ou 2, le troisième AS étant le 1^{er} AS par lequel passe le trajet de transfert des paquets.

4. Procédé selon la revendication 3, le trajet de transfert de paquets passant par une pluralité d'AS en séquence, les informations de trajet du trajet de transfert de paquets comprenant une liste ordonnée d'identifiants d'AS, la liste ordonnée d'identifiants d'AS comprenant une pluralité d'identifiants d'AS agencés séquentiellement, et la pluralité d'identifiants d'AS étant mis en correspondance un-à-un à la pluralité d'AS.

5. Procédé selon la revendication 2 ou 3, avant la détermination (308), par le dispositif de réseau, d'une relation commerciale d'une première paire d'AS et d'une relation commerciale d'une deuxième paire d'AS, le procédé comprenant en outre :
le téléchargement (304), par le dispositif de réseau, de la première base de données à partir d'un serveur de base de données, et
la génération (305), par le dispositif de réseau, de la deuxième base de données sur la base de la première base de données.

6. Dispositif de réseau (800), comprenant au moins un processeur (801) et une mémoire (802), la mémoire (802) stockant des instructions exécutables par ordinateur capables d'être exécutées sur le processeur (801) ; et lorsque les instructions exécutables par ordinateur sont exécutées par le processeur (801), le dispositif de réseau (800) étant en mesure de réaliser le procédé selon l'une quelconque des revendications 1 à 5.

7. Système de vérification de trajet, comprenant le dispositif de réseau (802) selon la revendication 6 et un serveur de base de données.
